(19) **Europäisches Patentamt**

**European Patent Office**

**Office européen des brevets**

(11) **EP 1 122 582 B1**

(12) **EUROPEAN PATENT SPECIFICATION**

(45) Date of publication and mention
of the grant of the patent:
**02.05.2003 Bulletin 2003/18**

(51) Int Cl.[7]: **G02F 1/025**, G02F 1/35,
G02B 6/12

(21) Application number: **01102327.2**

(22) Date of filing: **01.02.2001**

(54) **Nonlinear optical element**

Nichtlineares optisches Element

Elément optique non linéaire

(84) Designated Contracting States:
**FR**

(30) Priority: **04.02.2000 JP 2000028134**

(43) Date of publication of application:
**08.08.2001 Bulletin 2001/32**

(73) Proprietors:
• **DDI Corporation**
**Tokyo (JP)**
• **KDD Submarine Cable Systems Inc.**
**Tokyo (JP)**

(72) Inventors:
• **Usami, Masashi**
**Kamifukuoka-shi, Saitama (JP)**
• **Tanaka, Hideaki**
**Kamifukuoka-shi, Saitama (JP)**

• **Nishimura, Kosuke**
**Kamifukuoka-shi, Saitama (JP)**
• **Tsurusawa, Munefumi**
**Kamifukuoka-shi, Saitama (JP)**
• **Sakata, Haruhisa**
**Kamifukuoka-shi, Saitama (JP)**

(74) Representative: **Schaumburg, Thoenes & Thurn**
**Postfach 86 07 48**
**81634 München (DE)**

(56) References cited:
EP-A- 0 607 782          EP-A- 0 732 613
US-A- 4 687 286          US-A- 5 416 866
US-A- 5 740 287          US-A- 5 907 647

• **PATENT ABSTRACTS OF JAPAN vol. 1999, no.
14, 22 December 1999 (1999-12-22) -& JP 11
266203 A (NEC CORP), 28 September 1999
(1999-09-28)**

## Description

FIELD OF THE INVENTION

This invention relates to a nonlinear optical element, and more particularly relates to a nonlinear optical element applicable to waveform shaping of a high-speed optical signal used in such as an optical transmission system, an optical network system and an optical switching system.

BACKGROUND OF THE INVENTION

To realize an optical transmission system of ultra large capacity and ultra high speed, such technology is necessary that shapes a waveform of a signal without converting the optical signal into an electric signal. Especially, when a signal transmission rate per wavelength exceeds 10 Gb/s, it becomes difficult to process the electric signal in terms of operation speed and consumption energy. Accordingly, in recent years, it has been enthusiastically studied and developed of an optical waveform shaping element or device that is capable of shaping a deteriorated waveform of an optical signal in an original optical signal state and reducing intensity fluctuation (intensity noise) of the mark level and/or the space level.

As one of high speed optical waveform shaping elements, there is a saturable absorbing element which has optical threshold characteristics. An electroabsorption type saturable absorbing element, which semiconductor waveguide is applied with reverse bias can respond to a high speed optical signal since its absorption recovery time is several tens of picoseconds. Such a device having the features defined in the preamble of claim 1 is known from JP 11266203. However, as the optical threshold characteristics, the electroabsorption type saturable absorbing element is ineffective in suppressing the mark level noise although effective in suppressing the space level noise.

To suppress the noise of the mark level, optical limiting characteristics are required. A wavelength converter, having a configuration in which semiconductor optical amplifiers are employed on one or each of two optical paths or arms of a Mach-Zehnder interferometer system, has a cyclic transfer function and hence both optical threshold characteristics and optical limiting characteristics since it uses a nonlinear characteristics due to phase interference. However, its configuration is complicated since it requires two semiconductor optical amplifiers, a Mach-Zehnder interferometer circuit and another light source for wavelength conversion. In order to obtain a satisfactory signal, it is necessary to precisely balance the operating conditions (e.g. gain) of the two semiconductor optical amplifiers and limit the signal light intensity within a predetermined range.

An optical limiter is disclosed in US 5 740 287. It comprises a Bragg grating made of a periodic multilayer dielectric stack and is based on a refractive index change at high intensities providing a broadening of the photonic bandgap of the Bragg grating so that the wavelength of the light signal gets into the photonic bandgap and parts of the signal are reflected.

As stated above, the conventional nonlinear optical element or waveform shaper, which is capable of reducing the intensity noise of both mark level and space level, had such problems that its configuration is complicated and large-sized, and its operation control is also complicated causing unstable operation. Moreover, its stability against long-term environmental fluctuation, which is necessary for an optical communication system, is unsatisfactory and it is not suitable for mass-production either.

SUMMARY OF THE INVENTION

It is therefore an object of the present invention to provide a nonlinear optical element to solve the aforementioned problems.

Another object of the invention is to provide a nonlinear optical element capable of reducing intensity noise of both mark level and space level.

A further object of the invention is to provide a nonlinear optical element stably operating regardless of long-term environmental fluctuation.

Still a further object of the invention is to provide a nonlinear optical element being realized as a single element and to be miniaturized.

Another object of the invention is to provide a nonlinear optical element of low-cost and suitable for mass-production.

A nonlinear optical element according to the invention is composed of a semiconductor waveguide layer for guiding signal light, having a band gap wavelength shorter than a wavelength of the signal light, a corrugation diffraction Bragg grating to affect the signal light propagating on the semiconductor waveguide layer, wherein the material of the semiconductor waveguide layer is selected such that a reflection wavelength (Bragg wavelength) of the diffraction grating is shifted according to optical intensity of the signal light, and a voltage source to apply an electric field to the semiconductor waveguide layer in such a way that the semiconductor waveguide layer functions as a saturable absorber for the signal light.

The semiconductor waveguide layer gives optical threshold characteristics to the signal light through its own saturable absorbing characteristics in order to suppress optical intensity fluctuation at a space level part of the signal light. Also, since wavelength characteristics of Bragg reflection of the diffraction grating shift according to the intensity of the signal light, the optical intensity fluctuation at a mark level part of the signal light is suppressed. Consequently, intensity noise of both mark level and space level can be reduced. Naturally, it is also possible to obtain other nonlinear input/output characteristics such as optical threshold characteristics steeper than ever by properly selecting the optical intensity of the signal light, the signal wavelength, and the reflection characteristics of the diffraction grating.

Since it is possible to realize the nonlinear optical element as a single element, long-term stable characteristics are expected, and also its mass-production, miniaturization and price reduction are easily realized.

It is possible to discharge unnecessary residual carriers at high speed since the high electric field is applied by the DC voltage power supply source.

Different input/output characteristics are obtained when at least one of the period and amplitude of the diffraction grating continuously varies according to the propagation direction of the signal light.

Also, it is possible to nonlinearly process a plurality of optical signals having mutually different wavelengths in a lump when at least one of the period and amplitude of the diffraction grating discontinuously varies according to the propagation direction of the signal light. This operation is most useful in an optical wavelength division multiplexing transmission system.

It is possible to control the input/output characteristics even more precisely when a temperature controller is disposed for controlling the temperature of the semiconductor waveguide layer.

BRIEF DESCRIPTION OF THE DRAWING

The above and other objects, features and advantages of the present invention will be apparent from the following detailed description of the preferred embodiments of the invention in conjunction with the accompanying drawings, in which:

FIG. 1 shows a perspective view of a first embodiment according to the invention;
FIG. 2 shows a sectional view taken on line A-A of FIG. 1;
FIG. 3 shows a sectional view taken on line B-B of FIG. 1;
FIG. 4 shows input/output characteristics of the first embodiment;
FIG. 5(a) shows wavelength dependency of transmissivity for signal light with low input intensity;
FIG. 5(b) shows wavelength dependency of transmissivity for signal light with high input intensity;
FIG. 6 shows a longitudinal sectional view of a second embodiment according to the invention;
FIG. 7 shows wavelength dependency of transmissivity for signal light with low input intensity in the second embodiment;
FIG. 8 shows input/output characteristics of the second embodiment;
FIG. 9 shows a longitudinal sectional view of a third embodiment;
FIG. 10 shows wavelength dependency of transmissivity for signal light with low input intensity in the third embodiment; and
FIG. 11 shows input/output characteristics of the third embodiment.

DESCRIPTION OF THE PREFERRED EMBODIMENT

Embodiments of the invention are explained below in detail with reference to the drawings.

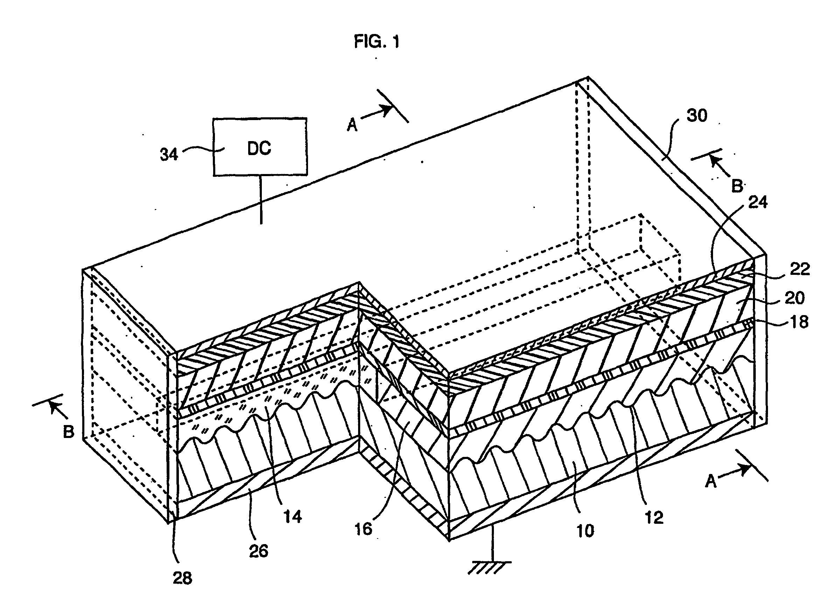

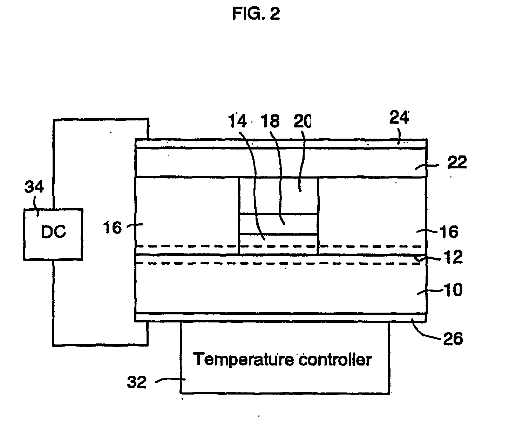

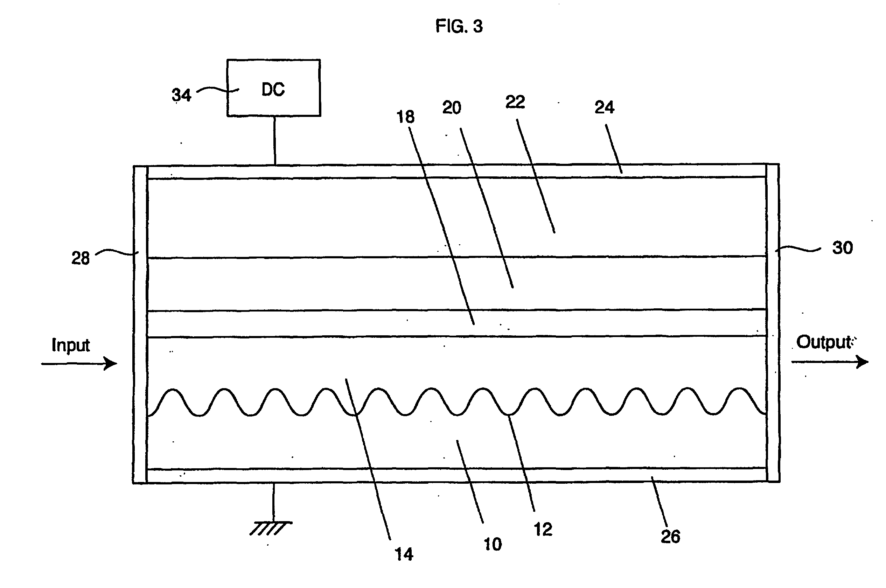

FIG. 1 shows a perspective view of a first embodiment according to the invention. To make the inner configuration easily understandable, it is illustrated partly broken away. FIG. 2 shows a sectional view taken on line A-A of FIG. 1, and FIG. 3 shows a sectional view taken on line B-B of FIG. 1 respectively.

A diffraction grating 12 with a pitch of 240 nm and a depth of 100 nm is fabricated on an n-type InP substrate 10, and furthermore, an InGaAsP waveguide layer 14 of a band gap wavelength 1.4 μm is formed on the diffraction grating 12. A cross section of the waveguide layer 14 is a rectangle of 1.5 μm in width and 0.4 μm in thickness. A semi-insulating InP layer 16 is formed on both sides of the waveguide layer 14 in order to concentrate the electric field on the waveguide layer 14. An InGaAsP pile-up preventing layer 18 of a band gap wavelength 1.3 μm and a p-InP cladding layer 20 are deposited on the waveguide layer 14 in that order. A p-InGaAsP contacting layer 22 is deposited on the layers 16 and 20. Electrodes 24 and 26 are formed on the top and the bottom of this element respectively, and also both facets of the element are coated with antireflection coatings 28 and 30.

Naturally, after the waveguide layer 14, the pile-up prevention layer 18 and cladding layer 20 are deposited and mesa-etched, the InP layer 16 is grown on both sides in order to bury the layers 14, 18 and 20.

The length of the nonlinear optical element shown in FIG. 1 is 500 μm, and signal light of a 1.55 μm wavelength enters the waveguide layer 14 through the front facet and outputs from the back facet. This element is also disposed on a temperature controller 32. The temperature controller 32 is composed of such as a Peltier element or a thin film heater. A DC power source 34 applies DC voltage between the electrodes 24 and 26.

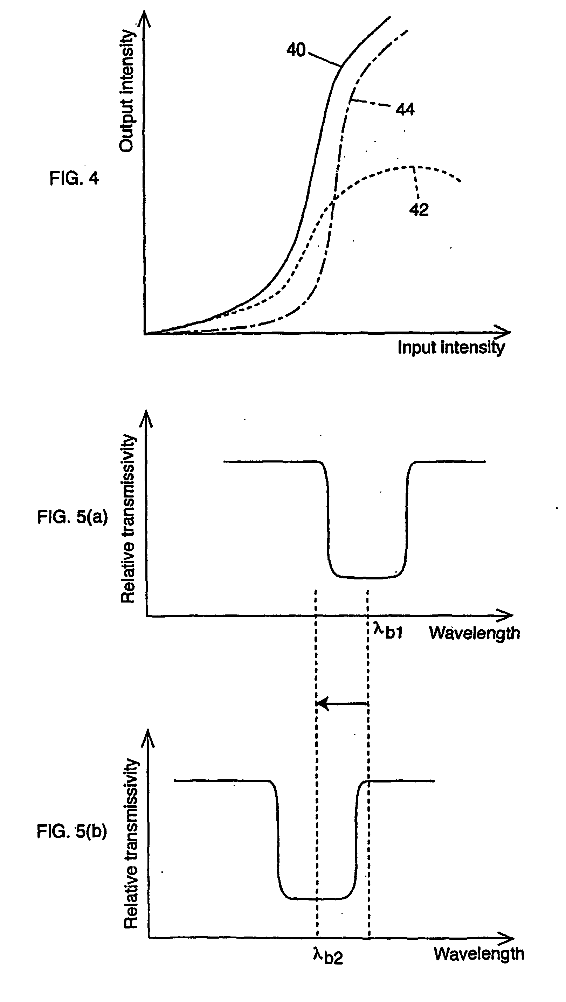

The operation of the embodiment is explained below with reference to FIGS. 4, 5(a) and 5(b). FIG. 4 shows a schematic diagram of input/output characteristics according to whether the diffraction grating 12 exists. The horizontal axis shows intensity of input light, and the vertical axis shows intensity of output light. Numeral 40 denotes input/output characteristics when the diffraction grating 12 does not exist, namely input/output characteristics based on the saturable absorbing characteristics of the waveguide layer 14 itself. Numerals 42 and 44 denote input/output characteristics when the diffraction grating 12 exists. The numeral 42 shows the input/output characteristics in such case that a signal light wavelength is set so that the diffraction grating 12 reflects signal light at the Bragg wavelength when the signal light with large optical intensity enters. The numeral 44 shows the input/output characteristics in such case that the signal light wavelength is set so that the diffraction grating 12 reflects signal light at the Bragg wavelength when the signal light with small optical intensity enters.

To make the operation easily understandable, first, the input/output characteristics are explained when the diffraction grating 12 is not disposed. When the DC power source 34 does not generate any voltage, the absorption edge wavelength of the waveguide layer 14 remains to be 1.4 µm and therefore the waveguide layer 14 is transparent for the signal light of the 1.55 µm wavelength. However, when the DC power source 34 applies the DC voltage, e.g. 3 V, between the electrodes 24 and 26 in order to apply the electric field to the waveguide layer 14, the waveguide layer 14 becomes capable of absorbing the signal light of the 1.55 µm wavelength since its absorption edge shifts to the longer wavelength side due to the Franz-Keldysh effect. So, the waveguide layer 14 can be considered as a saturable absorber. The absorption coefficient for the signal light decreases as the input light intensity increases because the absorption is saturated when the input light intensity is large. That is, when the diffraction grating 12 does not exist, the input/output characteristics show an optical threshold function shown as the characteristic curve 40 in FIG. 4.

Next, the input/output characteristics are explained when the diffraction grating 12 exists. A Bragg wavelength λb of the diffraction grating 12 varies according to the input light intensity. FIGS. 5(a) and 5(b) show wavelength characteristics of the relative transmissivity of the waveguide layer 14. The horizontal axis shows wavelength, and the vertical axis shows relative transmissivity. When signal light with small intensity inputs, the Bragg wavelength becomes, for example, 1550 nm ($=\lambda_{b1}$) and the relative transmissivity decreases (the reflectivity increases) within the bandwidth of 0.5 nm to 1.0 nm centering the Bragg wavelength $\lambda_{b1}$ as shown in FIG. 5(a). When the intensity of input signal light becomes larger, the Bragg wavelength shifts to the shorter wavelength side and becomes, for example, 1549.5 nm ($=\lambda_{b2}$) as shown in FIG. 5(b). This causes because the reflectivity of the waveguide layer 14 decreases according to the increase of the carrier density in the waveguide layer 14 since the absorbing amount increases in proportion to the increase of the input light intensity. The Bragg wavelength $\lambda_b$ is obtained from the following equation. That is,

$$\lambda_b = 2 \cdot n_{eff} \cdot \Lambda$$

where $n_{eff}$ expresses the equivalent refractive index and $\Lambda$ expresses the period of the diffraction grating. Accordingly, the Bragg wavelength $\lambda_b$ shifts to the shorter wavelength side when the equivalent reflective index

$n_{eff}$ decreases.

This embodiment shows the combined characteristics of the saturable absorbing characteristics 40 of the waveguide layer 14 itself and the wavelength shift of the Bragg reflection characteristics of the diffraction grating 12. With these characteristics, the nonlinear characteristics or the waveform shaping characteristics for operating at high speed can be realized.

The characteristics 42 in FIG. 4 are input/output characteristics obtained when a wavelength λs of the input signal light is equalized to the Bragg wavelength 1549.5 nm ($\lambda_{b2}$) at the high input light intensity. When the input signal light intensity is low, the transmissivity of the waveguide layer 14 becomes high because the wavelength λs of the signal light is outside the range of the Bragg reflection band as shown in FIG. 5(a), and accordingly the characteristics 42 show approximately the same optical threshold characteristics with the saturable absorbing characteristics 40. However, since the Bragg wavelength approaches the wavelength λs of the signal light according to the increase of the input signal light intensity, the transmissivity decreases. Also, once the input light intensity increases so as the wavelength λs of the signal light enters within the Bragg reflection band, the output light intensity does not increase anymore. That is, the optical limiter characteristics are obtained. Here, the optical threshold characteristics and the optical limiter characteristics are combined so that the nonlinear characteristics are obtained for suppressing intensity noise of both space level and mark level.

The characteristics 44 in FIG. 4 are input/output characteristics when the wavelength λs of the signal light is equalized to the Bragg wavelength 1550 nm ($\lambda_{b1}$) at the low input light intensity. When the signal light intensity is low, the transmissivity is low and the output intensity becomes almost zero since the wavelength λs of the signal light is within the Bragg reflection band. Because the signal light wavelength relatively shifts to the outside of the Bragg reflection band according to the increase of the input light intensity, the transmissivity increases to cause the rapid increase of the output light intensity. Namely, the optical threshold characteristics are obtained. Here, the obtained optical threshold characteristics are so steep that it could not be obtained from the saturable absorbing characteristics of the waveguide layer 14 itself.

To simplify the explanation, the embodiment in which the signal light wavelength is equalized to the Bragg wavelength is described above. However, the signal light wavelength is not necessarily equalized to the Bragg wavelength as far as the signal light wavelength is within such wavelength band that the transmission characteristics of the signal light vary due to the shift of filter characteristics according to the variation of the input optical intensity.

In the embodiment, it is necessary to predetermine the correlation between the Bragg wavelength of the diffraction grating 12 and the signal light wavelength.

Since the Bragg wavelength $\lambda_b$ of the semiconductor waveguide has the temperature dependency of approximately 0.1 nm/°C, it is easy to precisely set the Bragg wavelength $\lambda_b$ of the diffraction grating 12 under the temperature control by such as a Peltier element and/ or an integrated heater. The temperature controller 32 is used for controlling the Bragg wavelength $\lambda_b$ of the diffraction grating 12.

In the embodiment, when the signal light is off-state, the carrier generated by the saturable absorption is output by the electric field toward an outside circuit. With this operation, the responsivity of much higher speed is obtained.

As mentioned above, in the embodiment, by disposing the diffraction grating 12 on the saturable absorption waveguide 14, the nonlinear characteristics of high speed, miniature and high degree of freedom are easily realized.

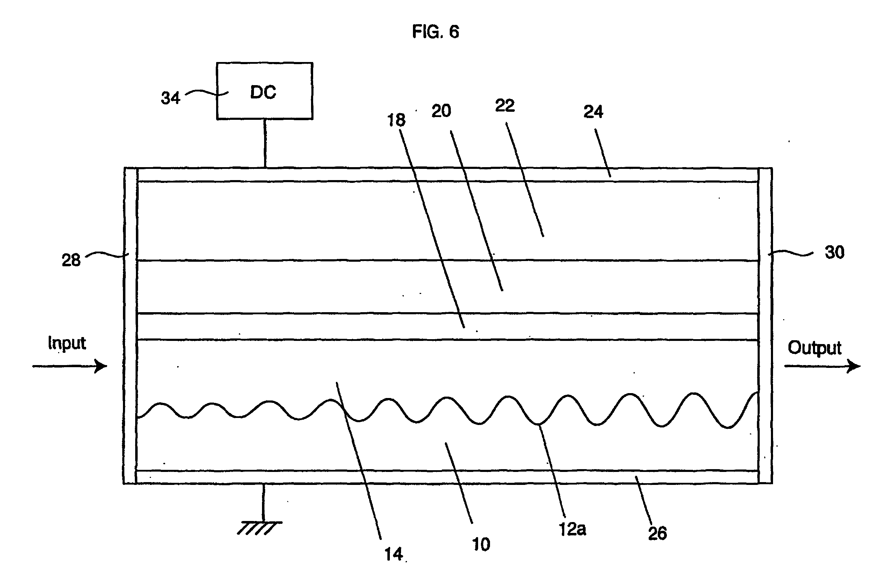

FIG. 6 shows a sectional view taken on the signal propagation direction of a second embodiment according to the invention. In the embodiments shown in FIGS. 1 through 3, the diffraction grating 12 has a constant pitch in the direction of the signal propagation. However, in the embodiment shown in FIG. 6, a diffraction grating 12a is used instead which pitch and amplitude vary in the direction of the signal propagation. That is, the diffraction grating 12a is a chirped grating which period gradually lengthens and which amplitude gradually extends as moving from the signal input side to the signal output side. The other configuration except for the diffraction grating 12a is the same to the embodiments in FIGS. 1 through 3, and identical elements are labeled with reference numerals common to those in the embodiments in FIGS. 1 through 3.

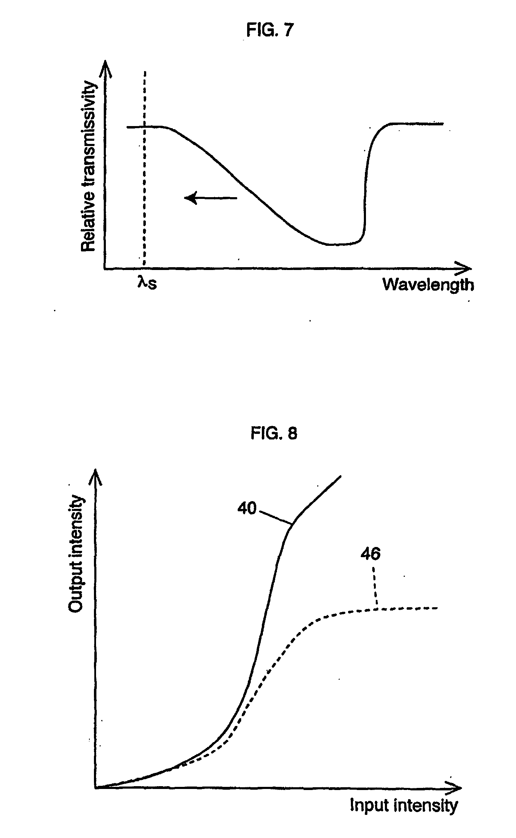

FIG. 7 shows the wavelength dependency of a transmissivity for signal light with low intensity in the embodiment shown in FIG. 6. The vertical axis expresses the relative transmissivity, and the horizontal axis expresses the wavelength. Owing to the chirped grating, it is possible to control the reflectivity of wider band. Here, the wavelength $\lambda$s of the signal light is set to the short wavelength side out of the Bragg reflection band. The transmission spectrum characteristics shift in the same way with the embodiment shown in FIG. 1 according to the increase of the input light intensity. However, since the transmissivity tends to linearly decrease toward the wavelength as shown in FIG. 7, such input/ output characteristics are obtained that the output light intensity becomes flat at a part with large input light intensity shown as characteristics 46 in FIG. 8. In FIG. 8, the horizontal axis and the vertical axis show the input light intensity and the output light intensity respectively.

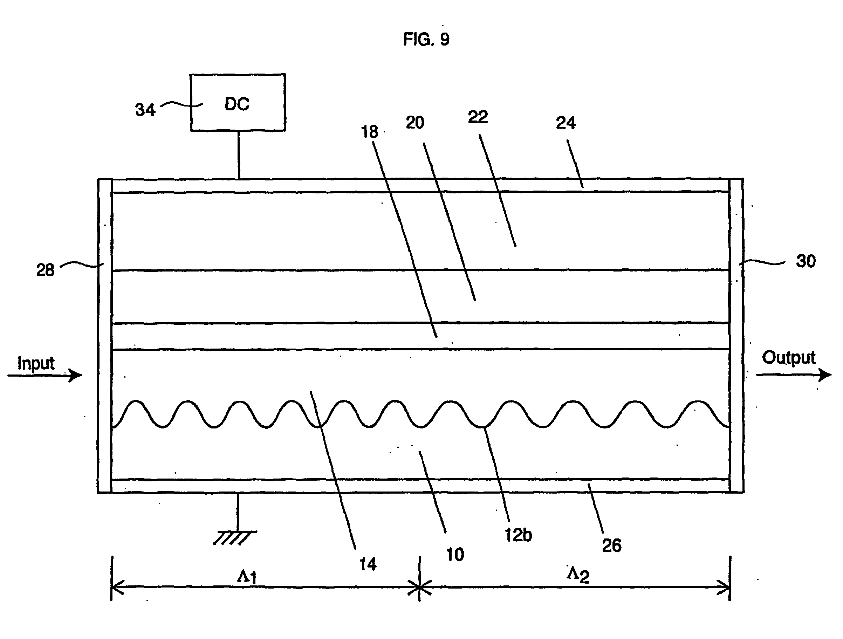

FIG. 9 shows a longitudinal sectional view of a third embodiment. In the embodiment shown in FIG. 9, a diffraction grating 12b has two kinds of pitches $\Lambda_1$ and $\Lambda_2$ in the direction of the signal propagation. That is, the pitch $\Lambda_1$ is 239.6 nm long with the range from the signal input side to the middle, and the pitch $\Lambda_2$ is 240 nm long with the range from the middle to the signal output side. The other configuration except for the diffraction grating 12b is the same to the embodiments shown in FIGS. 1 through 3, and identical elements are labeled with reference numerals common to those in the embodiments in FIGS. 1 through 3.

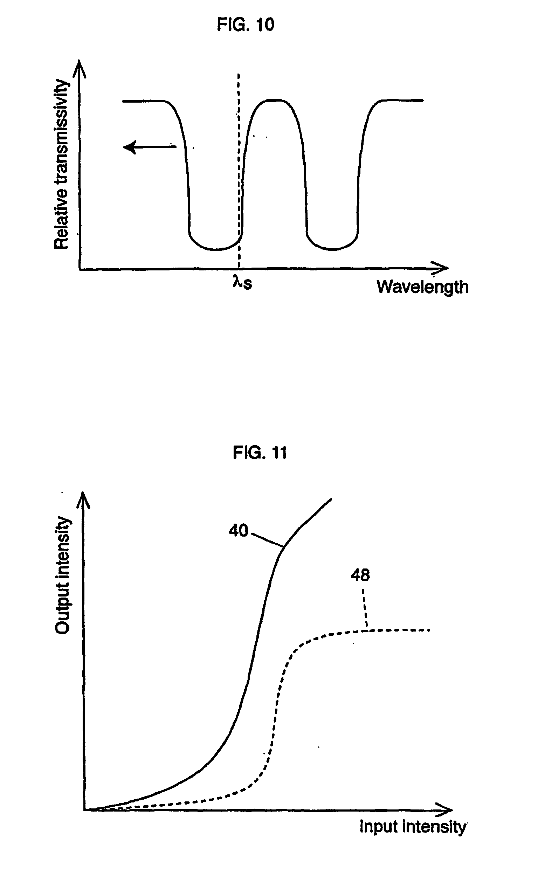

FIG. 10 shows the wavelength dependency of a transmissivity for signal light with low intensity in the embodiment shown in FIG. 9. The vertical axis expresses the relative transmissivity, and the horizontal axis expresses the wavelength. The transmission spectrum of the waveguide layer 14 shows W type characteristics having two dips due to the two kinds of the diffraction grating periods. Here, a wavelength $\lambda_s$ of the signal light is set to the long wavelength end of the shorter wavelength Bragg reflection band. The transmission spectrum characteristics shift in the same way with the embodiment shown in FIG. 1 according to the increase of the input light intensity. Consequently, the whole input/ output characteristics become the combination of the nonlinear characteristics in which the transmissivity lowers at parts of both low optical intensity and high optical intensity and heightens at parts of middle optical intensity, and the saturable absorbing characteristics of the waveguide layer 14. FIG. 11 shows the input/output characteristics of the embodiment shown in FIG. 9. The horizontal axis expresses the input light intensity, and the vertical axis shows the output light intensity. Characteristics 48 show the input/output characteristics of the embodiment shown in FIG. 9. As readily understandable from FIG. 11, in the embodiment in FIG. 9, both optical threshold operation and optical limiter operation are satisfactory, and such nonlinear characteristics are obtained that is suitable for suppressing intensity noises of both space level and mark level.

Although the diffraction grating 12b having the two kinds of periods is used in the embodiment shown in FIG. 9, even more complicated nonlinear characteristics can be realized by using a diffraction grating having no less than three kinds of periods. Also, it is possible to shape the waveform of each signal light of wavelength division multiplexed signal light in a lump by using a diffraction grating having no less than two kinds of periods.

In the above explanation, although the wavelength of the signal light was set to the 1.55 μm band, the similar operation effect can be obtained when other wavelength bands are used, for example, wavelength bands utilized in an ordinary optical transmission system such as 1.3 μm band, 0.98 μm band, 0.78 μm band, 0.68 μm band and any other wavelength bands being capable of combining with electroabsorptive semiconductor materials.

Although only the InGaAsP/InP system is mentioned as the material of the waveguide layer 14, the other materials also can be used. For instance, the following materials can be used, a GaAs/AlGaAs system, an InAlGaAs/InP system and an InGaP/GaAs system, and the others such as a Group III-V semiconductor and a Group II-VI semiconductor.

Although the active layer is composed of the bulk material, it is also possible to have a multi-quantum well structure using a QCSE effect. Instead of the diffraction gratings 12 and 12b with a constant pitch, a diffraction grating which pitch continuously varies in order to extend the filter band also can be used.

Although the diffraction gratings 12, 12a and 12b are formed under the waveguide layer 14, they can be also formed on or beside the waveguide layer.

As readily understandable from the aforementioned, according to the invention, a nonlinear optical element of high-speed operation can be provided which is applicable for reducing the intense noises of the mark level and the space level. Also, more complicated nonlinear characteristics are easily realized by controlling the configuration of a diffraction grating. Furthermore, since the electroabsorption effect is utilized, it is sufficiently responsive for high speed operation of several 10 Gbit/s. Compared with a conventional interferometer type nonlinear optical element, the nonlinear optical element according to the invention is small, more stable for long term environmental fluctuation, has the nonlinearity of high flexibility and operates at high speed.

While the invention has been described with reference to the specific embodiment, it will be apparent to those skilled in the art that various changes and modifications can be made to the specific embodiment without departing from the scope of the invention as defined in the claims.

## Claims

1. A nonlinear optical element comprising:

   a semiconductor waveguide layer (14) for guiding signal light, having a band gap wavelength shorter than a wavelength of the signal light; and an electric field applicator (34) to apply an electric field to the semiconductor waveguide layer in such a way that the semiconductor waveguide layer functions as a saturable absorber for the signal light; **characterized by** a corrugation diffraction Bragg grating (12) to affect the signal light propagating on the semiconductor waveguide layer, wherein the material of the semiconductor waveguide layer is selected such that a reflection wavelength of the diffraction grating is shifted according to the optical intensity of the signal light.

2. The nonlinear optical element of claim 1 wherein the reflection wavelength is practically equal to the wavelength of the signal light at certain optical intensity within a predetermined optical intensity range of the signal light.

3. The nonlinear optical element of claim 1 or 2 wherein at least one of the period and amplitude of the diffraction grating continuously varies in a direction of the signal light propagation.

4. The nonlinear optical element of claim 1 or 2 wherein at least one of the period and amplitude of the diffraction grating discontinuously varies in the direction of the signal light propagation.

5. The nonlinear optical element of any one of claims 1 through 4 further comprising a temperature controller for controlling the temperature of the semiconductor waveguide layer.

## Patentansprüche

1. Nichtlineares optisches Element, umfassend:

   eine Halbleiter-Wellenleiterschicht (14) zur Signallicht-Leitung mit einer Bandlücken-Wellenlänge, die kürzer als eine Wellenlänge des Signallichtes ist,

   und eine Vorrichtung (34) zum Anlegen eines elektrischen Feldes, um an der Halbleiter-Wellenleiterschicht ein elektrisches Feld derart anzulegen, daß die Halbleiter-Wellenleiterschicht als sättigbarer Absorber für das Signallicht wirkt, **gekennzeichnet durch**

   ein Bragg'sches Korrugations-Beugungsgitter (12), um das sich auf der Halbleiter-Wellenleiterschicht ausbreitende Signallicht zu beeinflussen, wobei das Material der Halbleiter-Wellenleiterschicht derart gewählt wird, daß sich eine Reflexionswellenlänge des Beugungsgitters gemäß der optischen Intensität des Signallichtes verschiebt.

2. Nichtlineares optisches Element nach Anspruch 1, bei dem die Reflexionswellenlänge praktisch gleich der Wellenlänge des Signallichtes bei einer bestimmten optischen Intensität innerhalb eines vorgegebenen Bereiches für die optische Intensität des Signallichts ist.

3. Nichtlineares optisches Element nach Anspruch 1 oder 2, bei dem sich von der Periode und der Amplitude des Beugungsgitters mindestens eines kontinuierlich in einer Richtung der Signallichtausbreitung ändert.

4. Nichtlineares optisches Element nach Anspruch 1 oder 2, bei dem sich von der Periode und der Amplitude des Beugungsgitters mindestens eines diskontinuierlich in der Richtung der Signallichtausbreitung ändert.

5. Nichtlineares optisches Element nach einem der Ansprüche 1 bis 4, ferner umfassend eine Temperatursteuerungsvorrichtung zum Steuern der Temperatur der Halbleiter-Wellenleiterschicht.

**Revendications**

1. Elément optique non linéaire comprenant :

   une couche de guide d'onde en semi-conducteur (14) destinée au guidage d'un signal lumineux, possédant une longueur d'onde de bande interdite plus courte que la longueur d'onde du signal lumineux ; et un applicateur de champ électrique (34) destiné à appliquer un champ électrique à la couche de guide d'onde en semi-conducteur d'une manière telle que la couche de guide d'onde en semi-conducteur fonctionne comme un absorbeur saturable pour le signal lumineux ; **caractérisé par**
   un réseau de diffraction de Bragg par ondulation (12) destiné à agir sur le signal lumineux se propageant sur la couche de guide d'onde en semi-conducteur, dans lequel le matériau constituant la couche de guide d'onde en semi-conducteur est choisi de telle sorte que la longueur d'onde de réflexion du réseau de diffraction est décalée en fonction de l'intensité optique du signal lumineux.

2. Elément optique non linéaire selon la revendication 1, dans lequel la longueur d'onde de réflexion est pratiquement égale à la longueur d'onde du signal lumineux à une certaine intensité optique située dans une plage d'intensité optique prédéterminée du signal lumineux.

3. Elément optique non linéaire selon la revendication 1 ou 2, dans lequel au moins la période ou l'amplitude du réseau de diffraction varie de façon continue dans la direction de propagation du signal lumineux.

4. Elément optique non linéaire selon la revendication 1 ou 2, dans lequel au moins la période ou l'amplitude du réseau de diffraction varie de façon discontinue dans la direction de propagation du signal lumineux.

5. Elément optique non linéaire selon l'une quelconque des revendications 1 à 4, comprenant en outre un contrôleur de température destiné à commander la température de la couche de guide d'onde en semi-conducteur.

FIG. 1

## FIG. 2

EP 1 122 582 B1

FIG. 3

EP 1 122 582 B1

FIG. 4

FIG. 5(a)

FIG. 5(b)

11

FIG. 6

FIG. 7

FIG. 8

FIG. 9

EP 1 122 582 B1

FIG. 10

FIG. 11